# EUROPÄISCHE PATENTSCHRIFT

(11) **EP 2 518 694 B1**
(45) Veröffentlichungstag und Bekanntmachung des Hinweises auf die Patenterteilung: **01.01.2020**
(21) Anmeldenummer: 12161789.8
(22) Anmeldetag: 28.03.2012
(51) Int. Cl.: G06F 17/50, G06T 19/20, G06T 19/00

(54) **Verfahren zur Anpassung eines CAD-Models eines Rohrverlaufs an eine reale Umgebung in einem Unterseeboot**
Method for adjusting a CAD model of a pipe layout to a real-world environment in a submarine
Procédé d'adaptation d'un modèle CAD d'une trajectoire de tube à un environnement réel dans un submersible

(30) Priorität: 30.04.2011 DE 102011100134
(43) Veröffentlichungstag der Anmeldung: 31.10.2012
(73) Patentinhaber: thyssenkrupp Marine Systems GmbH, 24143 Kiel (DE)
(72) Erfinder: Staack, Ingo, 24217 Schönberg (DE); Riedel, Michael, 23843 Bad Oldesloe (DE); Schuchardt, Rüdiger, 24223 Schwentinental (DE); Rieß, Patrick, 64295 Darmstadt (DE); Wuest, Harald, 64372 Ober-Ramstadt (DE)
(74) Vertreter: thyssenkrupp Intellectual Property GmbH

(56) Entgegenhaltungen:
- DE-A1- 10 134 176
- DE-A1-102008 043 445
- GAUSEMEIER J ET AL: "AR-PLANNING TOOL - DESIGNING FLEXIBLE MANUFACTURING SYSTEMS WITH AUGMENTED REALITY", PROCEEDINGS VIRUAL ENVIRONMENTS 2002. ACM SIGGRAPH/EUROGRAPHICS WORKSHOP ON VIRTUAL ENVIRONMENTS. BARCELONA, SPAIN, MAY 30 - 31, 2002; [EUROGRAPHICS WORKSHOP ON VIRTUAL ENVIRONMENTS], NEW YORK, NY : ACM, US, 30. Mai 2002 (2002-05-30), Seiten 19-25, XP001233143, ISBN: 978-1-58113-535-0
- ISHII HIROTAKE, OSHITA SATOSHI, YAN WEIDA, SHIMODA HIROSHI, IZUMI MASANORI: "Development and evaluation of a dismantling planning support system based on augmented reality technology", International Journal of NUCLEAR SAFETY AND SIMULATION (IJNS), Bd. 2, Nr. 1 März 2011 (2011-03), Seiten 52-60, XP002681984, ISSN: 2185-3495 Gefunden im Internet: URL:http://www.ijnsweb.com/?type=subscribe r&action=articleinfo&id=55 [gefunden am 2012-08-17]
- GEORGELI P ET AL: "An Industrial Augmented Reality Solution For Discrepancy Check", MIXED AND AUGMENTED REALITY, 2007. ISMAR 2007. 6TH IEEE AND ACM INTERNATIONAL SYMPOSIUM ON, IEEE, PISCATAWAY, NJ, USA, 13. November 2007 (2007-11-13), Seiten 111-115, XP031269883, ISBN: 978-1-4244-1749-0
- SCHOENFELDER R ET AL: "Augmented Reality for Industrial Building Acceptance", VIRTUAL REALITY CONFERENCE, 2008. VR '08. IEEE, IEEE, PISCATAWAY, NJ, USA, 8. März 2008 (2008-03-08), Seiten 83-90, XP031340003, ISBN: 978-1-4244-1971-5
- DUNSTON P S ET AL: "VIRTUAL VISUALIZATION FOR THE MECHANICAL TRADE", PROCEEDINGS OF THE 17TH IAARC/CIB/IEEE/IFR INTERNATIONAL SYMPOSIUM ON AUTOMATION AND ROBOTICS IN CONSTRUCTION. 17TH ISAREC 2000 , 2000, Seiten 1-6, XP002681985, NAT. TAIWAN UNIV.. TAIPEI, TAIWAN Gefunden im Internet: URL:http://www.iaarc.org/publications/full text/isarc2000-089_WD2.pdf [gefunden am 2012-05-17]
- Whitaker R. T. ET AL: "Object Calibration forAugmented Reality (Technical report ECRC-95-04)", European Computer-Industry Research Centre , 1995, Seiten Frontpg.-17, XP002681986, Gefunden im Internet: URL:http://reference.kfupm.edu.sa/content/ o/b/object_calibration_for_augmented_reali ty_1157075.pdf [gefunden am 2012-08-17]
- "7.1 AR im Service für Kraftwerks und Prozessanlagen" In: Wolfgang Friedrich (Hrsg.): "ARVIKA: Augmented Reality für EntwicklungProduktion und Service", 2004, Publicis KommunikationsAgentur GmbH, GWA, Erlangen, Deutschland pages 195-203, * page 195 - page 203 *
- PHAN V T ET AL: "Using AR for real-time crosscheck of ventilator ducts at worksite", PROCEEDINGS - VRCAI 2010, ACM SIGGRAPH CONFERENCE ON VIRTUAL-REALITY CONTINUUM AND ITS APPLICATION TO INDUSTRY - PROCEEDINGS - VRCAI 2010, ACM SIGGRAPH CONFERENCE ON VIRTUAL-REALITY CONTINUUM AND ITS APPLICATION TO INDUSTRY 2010 ASSOCIATION FOR COMPU, 2010, pages 293-298, DOI: 10.1145/1900179.1900241

## Beschreibung

Die Erfindung betrifft ein Verfahren zur Anpassung eines CAD-Modells eines Rohrverlaufs an eine reale Umgebung in einem Unterseeboot.

Das geringe Raumangebot in Unterseebooten und insbesondere in Unterseebooten kleinerer Bauart macht es erforderlich, die in diesen Unterseebooten eingesetzten Rohrleitungen unter optimaler Raumausnutzung anzuordnen. Hieraus ergeben sich häufig vergleichsweise komplexe Rohrverläufe, bei denen die diese Rohrverläufe bildenden Rohre diverse Krümmungen aufweisen.

Der zeichnerische Entwurf der Rohrverläufe und Rohre erfolgt rechnerunterstützt mittels CAD, wobei die Rohre in ein virtuelles Modell der Einbauumgebung der Rohre eingezeichnet werden. Vor der Herstellung der Rohre wird von dem Rohrverlauf auf der Grundlage der CAD-Daten ein Drahtmodell hergestellt und mit diesem Drahtmodell in der realen Einbauumgebung des Unterseeboots überprüft, ob die entworfenen Rohre die geforderte Passgenauigkeit aufweisen und ob der Rohrverlauf gegebenenfalls zu Kollisionen mit anderen Bauteilen oder Störkanten der Stahlkonstruktion des Unterseeboots führt. In Fällen, in denen das Drahtmodell nicht passgenau und kollisionsfrei am Einbauort angeordnet werden kann, wird es durch entsprechende Drahtverformung in die erforderliche Form gebracht. Daraufhin wird das modifizierte Drahtmodell mit einem Koordinatenmessgerät vermessen, wobei die ermittelten digitalisierten Daten anschließend die Grundlage für eine Anpassung des entworfenen CAD-Modells an die realen Einbaubedingungen bilden.

Vor diesem Hintergrund liegt der Erfindung die Aufgabe zugrunde, ein Verfahren zur Anpassung eines CAD-Modells eines Rohrverlaufs an eine reale Umgebung in einem Unterseeboot zu schaffen, das gegenüber den bislang üblichen Verfahren einfacher und schneller ausführbar ist und bei dem die vergleichsweise aufwändige Verwendung eines Drahtmodells des Rohrverlaufs entfällt. Eine weitere Aufgabe der Erfindung ist es, ein Kalibrierwerkzeug zur Durchführung des genannten Verfahrens zur Anpassung eines CAD-Modells eines Rohrverlaufs an eine reale Umgebung in einem Unterseeboot zur Verfügung zu stellen.

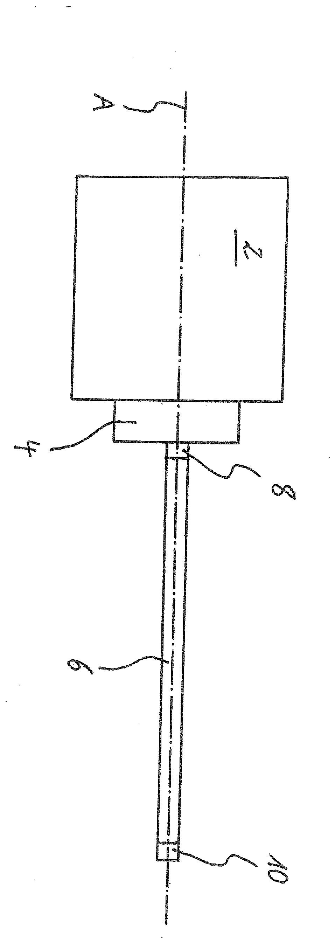

Gelöst wird diese Aufgabe durch ein Verfahren mit den in Anspruch 1 angegebenen Merkmalen. Vorteilhafte Weiterbildungen des Verfahrens ergeben sich aus den Unteransprüchen, der nachfolgenden Beschreibung sowie der Zeichnung.

Bei dem erfindungsgemäßen Verfahren zur Anpassung eines CAD-Modells eines Rohrverlaufs an eine reale Umgebung in einem Unterseeboot wird das CAD-Modell des Rohrverlaufs einer Videoaufnahme der realen Umgebung in dem Unterseeboot zu einer Augmented-Reality-Darstellung überlagert. Demzufolge ist vorgesehen, eine computergestützte erweiterte Realitätsdarstellung zu schaffen, indem in die Videoaufnahmen von der Einbauumgebung einer Rohrleitung in dem Unterseeboot ein virtuelles Bild des Rohrverlaufs projiziert wird, sodass sich ein Gesamtbild aus der realen Einbauumgebung und einer noch nicht hergestellten und eingebauten bislang nur als CAD-Modell vorliegenden Rohrleitung ergibt. In diesem Gesamtbild werden Nichtübereinstimmungen des digitalen Konstruktionsmodells des Rohrverlaufs mit der erforderlichen Ausgestaltung des Rohrverlaufs sofort erkennbar. Mittels eines interaktiven Editors ist es nun in schneller und einfacher Weise möglich, diese nicht übereinstimmenden Bereiche zu ändern, d. h. den Rohrverlauf in dem CAD-Modell mit hoher Genauigkeit an die tatsächliche Einbauumgebung anzupassen. In einem Beispiel, das nicht Teil der beantragten Erfindung ist, wird die Änderung des Rohrverlaufs mittels eines Touchscreen-PCs vorgenommen, an dem auch die Videokamera angeschlossen ist. Dementsprechend kann die Änderung des Rohrverlaufs direkt an dem Einbauort des Rohres in dem Unterseeboot vorgenommen werden.

Zum Initialisierung und Kalibrieren des Rohrverlaufs in der Augmented-Reality-Darstellung, d. h. des CAD-Modells in dem Videobild, werden gemäß der Erfindung optische Marker verwendet, die in der Videoaufnahme der realen Umgebung eine Mittelachse des Rohrverlaufs markieren. Hierzu werden am Einbauort in dem Unterseeboot mindestens zwei Marker auf der Mittelachse des Rohrverlaufs voneinander beabstandet angeordnet. Mit der durch die Marker definierten Mittelachse des Rohrverlaufs wird eine bekannte Mittelachse des CAD-Modells zur Übereinstimmung gebracht. Auf diese Weise wird mittels den optischen Markern und der Videokamera ein Koordinatensystem der CAD-Darstellung mit einem Koordinatensystem des von der Videokamera erfassten Raumes in Übereinstimmung gebracht.

In einen Beispiel, das nicht Teil der beantragten Erfindung ist, wird anschließend ein markerloses Tracking-Verfahren eingesetzt, das die sich ändernde Position und Orientierung der Videokamera von Bild zu Bild verfolgt. Das Tracking orientiert sich hierbei an einer rekonstruierten dreidimensionalen aus den Videobildern abgeleiteten Featuremap der Umgebung, in die die Rohrleitung eingebaut werden soll. Zur Rekonstruktion der Featuremap werden bevorzugt Punktdetektoren eingesetzt, die auf den Kamerabildern Punktfeature erkennen und bei einer Bewegung der Videokamera verfolgen, woraus sich eine für eine dreidimensionale Featuremap erforderliche Tiefeninformation ableiten lässt.

Zum Kalibrieren des Rohrverlaufs wird ein Kalibrierwerkzeug eingesetzt, das derart in der realen Umgebung angeordnet wird, dass zwei an dem Kalibrierwerkzeug angeordnete optische Marker auf einer Mittelachse des gewünschten Rohrverlaufs liegen.

Die an dem Kalibrierwerkzeug angeordneten Marker müssen auf der Mittelachse des Rohrverlaufs liegen und von der Videokamera erfasst werden können.Erfindungsgemäß wird das Kalibrierwerkzeug in einer Rohrhalterung, einer Rohrdurchführung oder in einem Rohranschluss angeordnet. In diesen Bauteilen kann das Kalibrierwerkzeug verhältnismäßig leicht derart befestigt werden, dass die Marker auf der durch diese Bauteile verlaufenden Mittelachse des Rohrverlaufs liegen.

Zur Kalibrierung des Rohrverlaufs in der Augmented-Reality-Darstellung bei dem oben beschrieben Verfahren zur Anpassung eines CAD-Modells eines Rohrverlaufs an eine reale Umgebung in einem Unterseeboot ist erfindungsgemäß ein Kalibrierwerkzeug vorgesehen, das einen Zentrierdorn und mindestens zwei optische Marker aufweist, wobei die Marker auf einer mit der Längsachse des Zentrierdorns identischen Achse angeordnet sind. Typischerweise weist das Kalibrierwerkzeug hierzu einen Abschnitt auf, in dem es sich nur in sehr geringem Maße in radialer Richtung über seine Längsachse hinaus erstreckt. Dieser Abschnitt, welcher von einem Stift gebildet wird, kann sich direkt an ein Ende des Zentrierdorns anschließen, wobei dieser Abschnitt ein Teil des Zentrierdorns sein kann. Bevorzugt ist allerdings eine Ausgestaltung, bei der dieser verjüngte Abschnitt des Kalibrierwerkzeugs mit den Markern ein separates Bauteil ist, das an einem Ende des Zentrierdorns in Verlängerung des Zentrierdorns befestigt ist. In diesem Fall besteht kostengünstig die Möglichkeit, einen handelsüblichen Zentrierdorn zu verwenden und an diesem den die Marker aufweisenden Stift in Verlängerung der Längsachse des Zentrierdorns zu befestigen. An diesem an dem Zentrierdorn befestigen Stift sind die Marker zweckmäßigerweise in Richtung dessen Längsachse bzw. in Richtung der Längsachse des Zentrierdorns voneinander beabstandet angeordnet. Der Zentrierdorn wird in einer Rohrhalterung, einer Rohrdurchführung oder in einem Rohranschluss beispielsweise mittels an dem Zentrierdorn ausgebildeter verstellbarer Spreizmittel so verspannt, dass die Längsachse des Zentrierdorns genau mit der Mittelachse des Rohrverlaufs, d. h. der Mittelachse einer durch die Rohrhalterung bzw. Rohrdurchführung geführten Rohrleitung oder einer an einem Rohranschluss angeschlossenen Rohrleitung übereinstimmt, sodass auch die an dem Kalibrierwerkzeug ausgebildeten Markierungen auf der Mittelachse des Rohrverlaufs liegen.

Die Art der verwendeten optischen Marker ist grundsätzlich beliebig, so lange sie einen ausreichend großen Kontrast zu ihrer Umgebung bilden und unabhängig vom Blickwinkel von einer Videokamera erkannt werden können. Vorteilhaft werden Marker eingesetzt, die in besonderem Maße sichtbares Licht aus- bzw. abstrahlen. So werden die beiden Marker bei dem erfindungsgemäßen Kalibrierwerkzeug vorzugsweise von Leuchtdioden gebildet. Diese sind an dem Kalibrierwerkzeug voneinander beabstandet in einem Bereich angeordnet, der die Längsachse des Kalibrierwerkzeugs bildet bzw. in unmittelbarer Nähe zu dieser Längsachse liegt. Zur Energieversorgung der Leuchtdioden ist das Kalibrierwerkzeug mit einer Spannungsquelle, z. B. mit einer Knopfzelle ausgestattet.

Weiter vorteilhaft können die zwei Marker des Kalibrierwerkzeugs auch von zwei Reflektionskörpern gebildet werden. Auch diese Reflektionskörper sind zweckmäßigerweise im Bereich der Längsachse des Kalibrierwerkzeugs mit Abstand voneinander angeordnet. Zweckmäßigerweise kann eine externe Lichtquelle vorgesehen sein, die die Reflektionsflächen anstrahlt.

Bevorzugt schließt sich der Stift, an welchem die Marker angeordnet sind, an den Zentrierdorn in Verlängerung dessen Längsachse an. Dementsprechend ist der Stift an einem Ende des Zentrierdorns angeordnet, dessen Längsachse mit der Längsachse des Zentrierdorns übereinstimmt. An dem Stift sind die beiden Marker zweckmäßigerweise an den Endbereichen, also mit größtmöglichem Abstand voneinander, angeordnet. Da der Stift nur einen verhältnismäßig geringen Querschnitt aufweist, ist sichergestellt, dass die Marker in unmittelbarer Nähe zu der Längsachse des Kalibrierwerkzeugs angeordnet sind.

Nachfolgend ist das Kalibrierwerkzeug anhand einer Zeichnung näher erläutert.

Die Zeichnung zeigt in einer Prinzipdarstellung schematisch stark vereinfacht ein Kalibrierwerkzeug. Dieses Kalibrierwerkzeug weist einen Zentrierdorn 2 auf. Der Zentrierdorn 2 dient dazu, das Kalibrierwerkzeug beispielsweise in einer Rohrhalterung oder Rohrdurchführung, durch die ein noch herzustellendes Rohr geführt werden soll oder in einem Rohranschluss für ein solches Rohr zu verspannen. Hierzu kann der Zentrierdorn 2 einen mit der Öffnung der Rohrhalterung, der Rohrdurchführung bzw. des Rohranschlusses korrespondierenden Querschnitt aufweisen oder es können an dem Zentrierdorn 2 in der Zeichnung nicht dargestellte radial ausfahrbare Spreizmittel ausgebildet sein, mit denen der Zentrierdorn 2 so in der Öffnung verspannt werden kann, dass eine Längsachse A des Zentrierdorns 2 durch das Zentrum der Öffnung führt. Bei dem Zentrierdorn 2 kann es sich sowohl um eine Sonderanfertigung als auch um einen handelsüblichen Zentrierdorn 2 handeln.

An den Zentrierdorn 2 schließen sich in Richtung der Längsachse A ein Gehäuse 4 und ein Stift 6 an. Der Stift 6 ist derart angeordnet, dass seine Längsachse mit der Längsachse A des Zentrierdorns 2 übereinstimmt. Demzufolge ist der Stift 6 dann, wenn das Kalibrierwerkzeug über den Zentrierdorn 2 in einer Rohrhalterung, einer Rohrdurchführung oder einem Rohranschluss verspannt ist, direkt auf der Mittelachse eines Rohres angeordnet, das durch die Rohrhalterung bzw. Rohrdurchführung geführt werden soll oder an dem Rohranschluss angeschlossen werden soll.

An dem Stift 6 sind zwei optische Marker ausgebildet. Diese Marker werden von Leuchtdioden 8 und 10 gebildet, die von einer in dem Gehäuse 4 angeordneten Knopfzelle mit Spannung versorgt werden. Die Leuchtdioden 8 und 10 sind an den beiden Enden des Stiftes 6 angeordnet. So befindet sich die Leuchtdiode 8 an dem dem Zentrierdorn 2 zugewandten Ende des Stiftes 6, während die Leuchtdiode 10 an dessen von dem Zentrierdorn 2 abgewandten Ende angeordnet ist.

Das dargestellte Kalibrierwerkzeug wird bei einem Verfahren zur Anpassung eines CAD-Modells eines Rohrverlaufs an eine reale Umgebung in einem Unterseeboot eingesetzt, bei dem das CAD-Modell des Rohrverlaufs einer Videoaufnahme der realen Einbauumgebung des Rohres in dem Unterseeboot überlagert wird. Hierbei dient das Kalibrierwerkzeug zum Initialisieren und Kalibrieren des CAD-Modells des Rohrverlaufs in dem Videobild.

In der mit einer Videokamera aufzunehmenden Umgebung, in der das zunächst lediglich als CAD-Modell vorliegende Rohr eingebaut werden soll, wird das Kalibrierwerkzeug, wie bereits erwähnt, in eine Rohrhalterung, eine Rohrdurchführung oder in einem Rohranschluss angeordnet und mittels des Zentrierdorns 2 so zentriert, dass die Längsachse A mit einer Mittelachse des zukünftigen Rohrverlaufs übereinstimmt. In diesem Fall liegen die Leuchtdioden 8 und 10 direkt auf der Mittelachse des zukünftigen Rohrverlaufs. In einer Videoaufnahme von dem Einbauraum sind die von den Leuchtdioden 8 und 10 erzeugten Lichtpunkte deutlich erkennbar. Zum Kalibrieren des CAD-Modells in der Videoaufnahme wird nun die in dem CAD-Modell eingezeichnete Mittelachse des Rohrverlaufs in dem Videobild der direkten Verbindungslinie zwischen den beiden von den Leuchtdioden 8 und 10 erzeugten Lichtpunkten überlagert, sodass das CAD-Modell genau in der erforderlichen Lage in dem Videobild justiert ist.

### Bezugszeichenliste

- 2: - Zentrierdorn
- 4: - Gehäuse
- 6: - Stift
- 8: - Leuchtdiode
- 10: - Leuchtdiode

- A: - Längsachse

## Patentansprüche

1. Computer-gestütztes Verfahren zur Anpassung eines CAD-Modells eines Rohrverlaufs an eine reale Umgebung in einem Unterseeboot, bei dem das CAD-Modell des Rohrverlaufs einer Videoaufnahme der realen Umgebung zu einer Augmented-Reality-Darstellung überlagert wird und die Geometrie des Rohrverlaufs mittels eines interaktiven Editors in mindestens einem nicht übereinstimmenden Bereich verändert wird, wobei zur Kalibrierung des Rohrverlaufs in der Augmented-Reality-Darstellung optische Marker verwendet werden, die in der Videoaufnahme der realen Umgebung eine Mittelachse des Rohrverlaufs markieren, und wobei zur Kalibrierung des Rohrverlaufs in der realen Umgebung ein Kalibrierwerkzeug angeordnet wird und
das Kalibrierwerkzeug mit einem Zentrierdorn (2) und mit mindestens zwei optischen Markern versehen ist, die auf einem Stift (6) angeordnet sind, dessen Längsachse mit der Längsachse (A) des Zentrierdorns (2) übereinstimmt, wobei der Stift (6) bei Verspannung des Kalibrierwerkzeugs über den Zentrierdorn (2) in einer Rohrhalterung, einer Rohrdurchführung oder einem Rohranschluss direkt auf einer Mittelachse des Rohrverlaufs angeordnet wird, welcher durch die Rohrhalterung oder Rohrdurchführung geführt werden soll oder an dem Rohranschluss angeschlossen werden soll.

2. Verfahren nach Anspruch 2, bei dem das Kalibrierwerkzeug in einer Rohrhalterung oder in einem Rohranschluss angeordnet wird.

3. Verfahren nach Anspruch 1 oder 2, bei dem die Marker des Kalibrierungswerkzeuges von zwei Leuchtdioden (8, 10) gebildet werden.

4. Verfahren nach Anspruch 1 oder 2, bei dem die Marker des Kalibrierungswerkzeuges von zwei Reflektionskörpern gebildet werden.

5. Verfahren nach einem der Ansprüche 3 oder 4, bei dem sich der Stift des Kalibrierungswerkzeuges (6) an den Zentrierdorn (2) in Verlängerung dessen Längsachse (A) anschließt.

## Claims

1. Computer-aided method for adjusting a CAD model of a pipe layout to a real-world environment in a submarine, in which the CAD model of the pipe layout is superimposed on a video recording of the real-world environment to form an augmented-reality display, and the geometry of the pipe layout in at least one non-coincident region is changed by means of an interactive editor, wherein, in order to calibrate the pipe layout in the augmented-reality display, use is made of optical markers which mark a central axis of the pipe layout in the video recording of the real-world environment, and wherein a calibration tool is arranged in order to calibrate the pipe layout in the real-world environment, and
the calibration tool is provided with a centring mandrel (2) and with at least two optical markers, which are arranged on a pin (6), the longitudinal axis of which coincides with the longitudinal axis (A) of the centring mandrel (2), wherein, when the calibration tool is clamped over the centring mandrel (2) in a pipe holder, a pipe lead-through or a pipe connection, the pin (6) is arranged directly on a central axis of the pipe layout which is to be guided through the pipe holder or pipe lead-through or is to be connected to the pipe connection.

2. Method according to Claim 2, in which the calibration tool is arranged in a pipe holder or in a pipe connection.

3. Method according to Claim 1 or 2, in which the markers of the calibration tool are formed by two light-emitting diodes (8, 10).

4. Method according to Claim 1 or 2, in which the markers of the calibration tool are formed by two reflective bodies.

5. Method according to either of Claims 3 and 4, in which the pin of the calibration tool (6) adjoins the centring mandrel (2) in extension of the longitudinal axis (A) of the latter.

## Revendications

1. Procédé assisté par ordinateur d'adaptation d'un modèle CAD d'une trajectoire de tube à un environnement réel dans un submersible, dans lequel le modèle CAD de la trajectoire de tube d'un enregistrement vidéo de l'environnement réel est superposé à une représentation en réalité augmentée et la géométrie de la trajectoire est modifiée au moyen d'un éditeur interactif dans au moins une zone non concordante, dans lequel des marqueurs optiques qui marquent un axe central de la trajectoire de tube dans l'enregistrement vidéo de l'environnement réel sont utilisés pour étalonner la trajectoire de tube dans la représentation en réalité augmentée, et dans lequel un outil d'étalonnage est disposé pour étalonner la trajectoire de tube dans l'environnement réel et l'outil d'étalonnage est muni d'un mandrin de centrage (2) et d'au moins deux marqueurs optiques qui sont disposés sur une broche (6) dont l'axe longitudinal concorde avec l'axe longitudinal (A) du mandrin de centrage (2), dans lequel, lorsque l'outil d'étalonnage est serré par l'intermédiaire de la broche de centrage (2) dans un support de tube, un passage de tube ou un raccord de tube, la broche (6) est disposée directement sur un axe central de la trajectoire de tube, lequel axe central doit être guidé à travers le support de tube ou le passage de tube ou doit être raccordé au raccord de tube.

2. Procédé selon la revendication 2, dans lequel l'outil d'étalonnage est disposé dans un support de tube ou dans un raccord de tube.

3. Procédé selon la revendication 1 ou 2, dans lequel les marqueurs de l'outil d'étalonnage sont formés par deux diodes électroluminescentes (8, 10).

4. Procédé selon la revendication 1 ou 2, dans lequel les marqueurs de l'outil d'étalonnage sont formés par deux corps réfléchissants.

5. Procédé selon l'une des revendications 3 ou 4, dans lequel la broche de l'outil d'étalonnage (6) est raccordée au mandrin de centrage (2) dans le prolongement de son axe longitudinal (A).
